# EUROPEAN PATENT SPECIFICATION

(11) **EP 3 048 346 B1**
(45) Date of publication and mention of the grant of the patent: **13.09.2017**
(21) Application number: 16151909.5
(22) Date of filing: 19.01.2016
(51) Int. Cl.: F16K 15/03, F16K 27/02

(54) **CHECK VALVE WITH CLOCKING AND ORIENTATION FEATURES**
RÜCKSCHLAGVENTIL MIT TAKT- UND AUSRICHTUNGSMERKMALEN
CLAPET DE NON-RETOUR AVEC CARACTÉRISTIQUES D'ORIENTATION ET DE VERROUILLAGE

(30) Priority: 20.01.2015 US 201514600756
(43) Date of publication of application: 27.07.2016
(73) Proprietor: United Technologies Corporation, Farmington, CT 06032 (US)
(72) Inventor: PATEL, Harshil, West Hartford, CT Connecticut 06110 (US)
(74) Representative: Bridge, Kerry Ann

(56) References cited:
- US-A- 2 947 443
- US-A1- 2012 125 453
- US-A1- 2014 366 966

## Description

### BACKGROUND

This application relates to air pressure systems. More specifically, this application relates to clocking and orienting a check valve in an air pressure system. A check valve is a valve that allows a fluid, such as air, to move in only one direction. A check valve, typically, will have one or more doors or flaps that open when a fluid applies pressure to the doors. The fluid can then flow through the check valve. If fluid begins to flow backwards and generate a back pressure, the check valve will close and the fluid cannot flow back through the check valve. A check valve can be disposed between two ducts which are held together by a V-band clamp. US20120125453 discloses a check valve according to the preamble of claim 1.

### SUMMARY

In one embodiment of this disclosure an assembly is described. The assembly includes a check valve. The check valve includes a circular check valve flange that circumscribes a central axis and defines an outer perimeter of the check valve. The check valve also includes a first tab that extends radially outward from the check valve flange and has a first circumferential width and a first radial length. The check valve also includes a second tab that extends radially outward from the check valve flange and has a second circumferential width and a second radial length. The first circumferential width is different than the second circumferential width and the first radial length is greater than the second radial length. The first tab and the second tab of the check valve are disposed about the check valve flange at angles other than 180 degrees. The assembly also includes a first duct. The first duct includes a circular first duct flange that defines an outer perimeter of the first duct. The first duct also includes a first slot that is formed in the first duct flange. The first slot has a third circumferential length and a third radial length and is configured to substantially receive the first tab. The first duct also includes a second slot that is formed in the first duct flange. The second slot has a fourth circumferential width and a fourth radial length and is configured to substantially receive the second tab. The assembly also includes a second duct. The second duct includes a circular second duct flange that is configured to engage the first duct flange.

In another embodiment of this disclosure a check valve is disclosed. The check valve includes a circular check valve flange that circumscribes a central axis and defines an outer perimeter of the check valve. The check valve also includes a first tab that extends radially outward from the check valve flange and has a first circumferential width and a first radial length. The check valve also includes a second tab that extends radially outward from the check valve flange and has a second circumferential width and a second radial length. The first circumferential width is different than the second circumferential width and the first radial length is greater than the second radial length. The first tab and the second tab of the check valve are disposed about the check valve flange at an angle other than 180 degrees apart.

In yet another embodiment, according to this disclosure, a method for clocking and orienting a check valve with respect to a first duct and a second duct is disclosed. The method includes the step of positioning a first tab, which extends radially outward from a check valve flange of a check valve, within a first slot of a first duct flange. The first tab has a first circumferential width and a first radial length. A second tab, that extends radially outward from the check valve flange, is positioned within a second slot on the first duct flange. The second tab has a second circumferential width and a second radial length. The circumferential width of the first tab is different than the circumferential width of the second tab and the radial length of the first tab is greater than the radial length of the second tab. The first tab and the second tab are positioned at an angle other than 180 degrees about the check valve flange. After the first and second tabs are positioned in the first and second slots, a second duct flange is engaged with the first duct flange.

### BRIEF DESCRIPTION OF THE DRAWINGS

FIG. 1 is an exploded perspective view of an air pressure system.
FIG. 2 is a side plan view of a check valve having two radially extending tabs.
FIG. 3 is a side plan view of a duct having two slots for receiving two radially extending tabs.
FIG. 4 is a side plan view showing the check valve of FIG. 2 disposed within the duct of FIG. 3.
FIG. 5 is a side plan view showing a V-band clamp engaged with the duct and the check valve shown in FIG. 4 (second duct not shown).
FIG. 6 is a cross-sectional view along line 6-6, of FIG. 4 showing first and second ducts engaged with the check valve.
FIG. 7 is a cross-sectional view along line 7-7, of FIG. 4 showing first and second ducts engaged with the check valve.
FIG. 8 is a flow diagram illustrating a method of positioning a check valve between two ducts.

### DETAILED DESCRIPTION

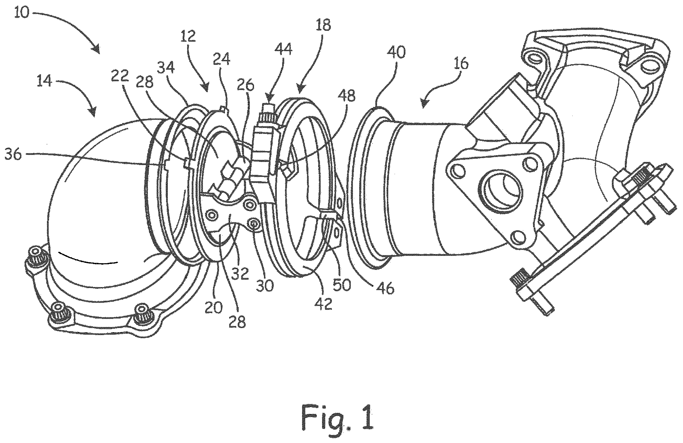

FIG. 1 shows an exploded perspective view of air pressure system 10. Air pressure system 10 can be positioned within a gas turbine engine. Air pressure system 10 includes check valve 12, first duct 14, second duct 16, and V-band clamp 18. Check valve 12 includes check valve flange 20, first tab 22, second tab 24, hinge 26, doors 28, rods 30, and post 32. First duct 14 includes first duct flange 34, first slot 36, and second slot 38 (not shown in FIG. 1). Second duct 16 includes second duct flange 40. V-band clamp 18 includes V-band segment 42, latch 44, link 46, gap 48, and gap 50.

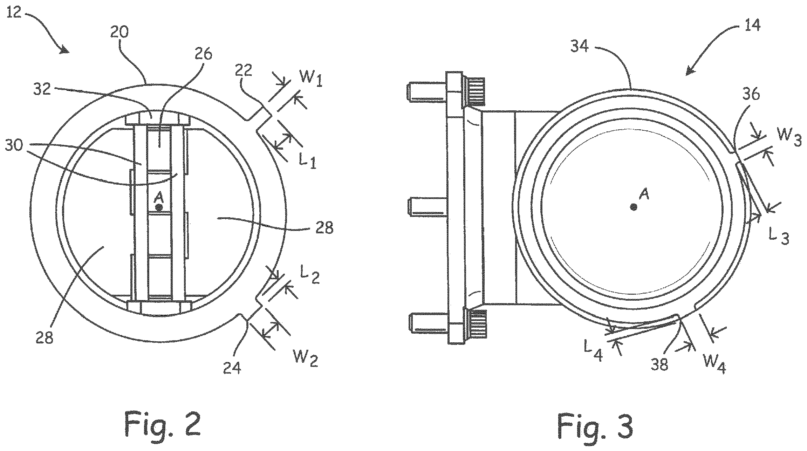

Air pressure system 10 is assembled by positioning check valve 12 between first duct 14 and second duct 16. First duct flange 34 and second duct flange 40 are configured to engage each other and the flanges have a V-profile when they are engaged. V-band clamp 18 is positioned about the flanges and is used to press the flanges together. Check valve 12 is secured between first duct 14 and second duct 16 by the engagement of first duct flange 34 and second duct flange 40. Check valve 12 can help to regulate both the air pressure and the direction that air flows through air pressure system 10. To better understand air pressure system 10, the above referenced components will be discussed in more detail with continued reference to FIG.1 and additional reference to FIGs. 2-7.

FIG. 2 is a side plan view of check valve 12. Check valve flange 20 is circular and circumscribes a central axis *A* (projecting from the page towards and away from the reader) of check valve 12. Check valve flange 20 also defines an outer perimeter of check valve 12. First tab 22 and second tab 24 extend radially outward from check valve flange 20. As shown in FIG. 2, first tab 22 and second tab 24 are disposed at approximately a ninety degree angle with respect to each other. First tab 22 and second tab 24 can be disposed about check valve flange 20 at any other angle, other than 180 degrees, without departing from the scope of this disclosure.

First tab 22 has a circumferential width *w*₁ and second tab 24 has a circumferential width *w*₂ different from width *w*₁. First tab 22 has a radial length *l*₁ and second tab 24 has a radial length *l*₂ different from length *l*₁. In some embodiments, width *w*₁ is greater than width *w*₂. In other embodiments, width *w*₂ is greater than width *w*₁. In all embodiments, however, length *l*₁ is greater than length *l*₂. Each of first tab 22 and second tab 24 have an axial thickness that is substantially equal to an axial thickness of check valve flange 20.

Disposed radially inward from check valve flange 20 is hinge 26. Hinge 26 joins doors 28. Extending outward from each end of hinge 26 are posts 32. Rods 30 span between posts 32. Hinge 26 can have a spring (not shown) which biases doors 28 against check valve 12. The spring can be calibrated to yield at a certain pressure applied by the fluid, which allows doors 28 to swing to an open position. In some embodiments, doors 28 open into second duct 16. In other embodiments, doors 28 open into first duct 14. Doors 28 abut rods 30 when they are fully open. Two doors 28 are shown, thus making check valve 12 a duo check valve. Having two doors 28 can help ensure that if one of doors 28 fails (e.g., will not open) check valve 12 can still at least partially function. In other embodiments check valve 12 has only one door 28 or more than two doors 28.

Hinge 26 allows doors 28 to open only in one direction. Check valve 12, therefore, is what is known as a one-way valve. That is, fluid can only flow in the direction that doors 28 open. Fluid flowing in the opposite direction creates a back pressure which closes doors 28. In this embodiment, hinge 26 only allows doors 28 to open into second duct 16. Therefore, fluid only flows from first duct 14 to second duct 16. To better understand how these components cooperate with each other, first duct 14 is described with reference to FIG. 3.

FIG. 3 is a side plan view of first duct 14. First duct flange 34 is circular and circumscribes a central axis *A* (projecting from the page towards and away from the reader) of first duct 14. First duct flange 34 is configured to engage check valve flange 20 as well as tabs 22 and 24. The radius of first duct flange 34 can be greater than the radius of check valve flange 20. This can help to engage check valve 12 with first duct 14, allowing check valve 12 to fit inside first duct flange 34.

First slot 36 and second slot 38 are disposed about first duct flange 34 in positions commensurate with first tab 22 and second tab 24 of check valve 12. That is, they are also spaced approximately ninety degrees apart. The circumferential width *w*₃ of first slot 36 and circumferential width *w*₄ of second slot 38, additionally, are dimensioned to receive first tab 22 and second tab 24. First slot 36 also has a radial length *l*₃ and second slot has a radial length *l*₄. As shown, width *w*₃ of first slot 36 is smaller than width *w*₂ of second tab 24. In other embodiments, width *w*₄ of second slot is less than width *w*₁ of first tab 22. Additionally, length *l*₁ of first tab 22 is greater than length *l*₃ of first slot 36, while length *l*₄ of second slot 38 substantially matches length *l*₂ of second tab 24.

Additionally, first duct flange 34 is configured to engage second duct flange 40. First duct flange 34 has a half V-profile, as does second duct flange 40. When flanges 34 and 40 are engaged they form a full V-profile. The V-profile allows V-band clamp 18 to attach and press flanges 34 and 40 together. Before going into further detail regarding joining first duct 14 and second duct 16, it is necessary to understand the role that first tab 22 and second tab 24 have in air pressure system 10 in regards to properly clocking check valve 12 in first duct 14 and orienting check valve 12 with respect to a direction of fluid flow through first duct 14 and second duct 16.

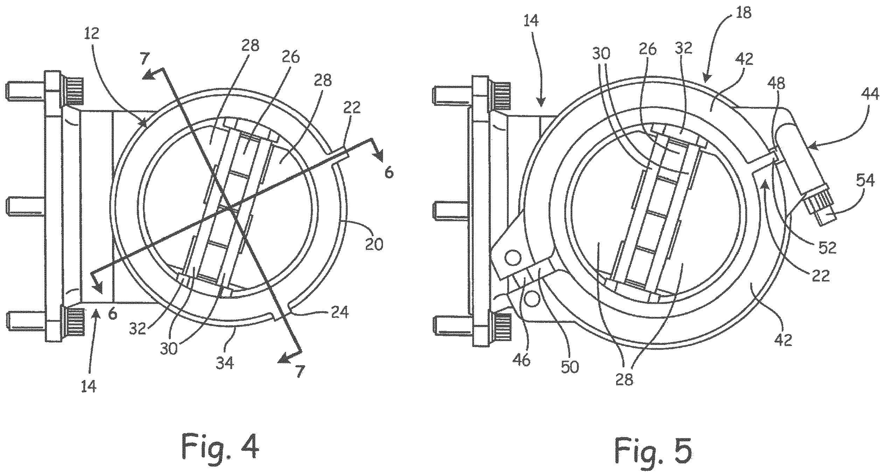

FIG. 4 is a side plan view showing check valve 12 engaged with first duct 14. As shown in FIG. 4, first tab 22 is positioned within first slot 36 and second tab 24 is positioned within second slot 38. First slot 36 and second slot 38 have different circumferential widths (*w*₃ and *w*₄, respectively) and are configured to receive first tab 22 and second tab 24. One of first tab 22 or second tab 24 will have a greater width than either first slot 36 or second slot 38. As a result, either first tab 22 will not be able to fit in second slot 38 or second tab 24 will not be able to fit in first slot 36. When first and second tabs 22 and 24 are properly positioned within first and second slots 36 and 38, check valve 12 is confined to one rotational position about the central axis *A* of first duct flange 34. That is, check valve 12 is clocked with respect to first duct flange 34.

Properly clocking check valve 12 can be important to ensure that check valve 12 functions correctly. Clocking check valve 12 positions doors 28 with respect to a fluid flowing from first duct 14 to second duct 16. As described above, doors 28 are configured to open when a certain pressure is applied to them by a fluid. Depending on check valve 12's rotational position, different pressures may be applied to different sections of doors 28. If this is the case, doors 28 might not open evenly, which could affect the flow of fluid through check valve 12. To account for this, check valve 12 can be rotated to an optimum position, which accounts for the dynamics present in the system that check valve 12 is used in. Therefore, it is important to ensure that check valve 12 is properly rotated or clocked.

In addition to properly clocking check valve 12, it is also important to ensure that check valve 12 is properly oriented. In other words, check valve 12 must not be installed backwards. If check valve 12 is installed backwards, then fluid in air pressure system 10 would not flow in the correct direction.

First tab 22 and second tab 24, along with first slot 36 and second slot 38, ensures proper orientation of check valve 12. As shown in FIG. 4, check valve 12 is properly oriented with respect to fluid flow in that doors 28 open into second duct 16. If, however, check valve 12 were flipped 180 degrees such that doors 28 opened into first duct 14, first tab 22 would be aligned with second slot 38 and second tab 24 would be aligned with first slot 36. In such a case, second tab 24 would not be able to engage first slot 36 because circumferential width *w*₃ of first slot 36 is less than circumferential width *w*₂ of second tab 24. Because second tab 24 could not be positioned within first slot 36, check valve 12 cannot be installed in first duct flange 34 backwards. Air pressure system 10, consequently, cannot be assembled if check valve 12 is not properly oriented.

Once check valve 12 is positioned within first duct flange 34, second duct flange 40 of second duct 16 is engaged with first duct flange 34 and check valve flange 20. First duct flange 34 is secured to second duct flange 40 by V-band clamp 18. To better show this engagement reference is made to FIG. 5.

Second duct 16 is not shown in FIG. 5 so that other aspects of air pressure system 10 can be shown. In addition to the previously described components, FIG. 5 additionally includes V-band clamp 18. V-band clamp 18 includes V-band segments 42, latch 44, and link 46. V-band segments 42 have a semi-circular profile and generally circumscribe first duct flange 34 and second duct flange 40. As depicted, V-band clamp 18 includes two V-band segments 42. Other embodiments of V-band clamp 18 can include any plural number of V-band segments 42. Each V-band segment 42 has a V-groove which is dimensioned to fit the V-profile formed by first duct flange 34 and second duct flange 40 when they are engaged. V-band segments 42 are joined at their adjacent ends by latch 44 and link 46.

Latch 44 can be selected from many suitable latches. Some examples of suitable latches include a T-bolt latch, a trunnion latch, and a T-bolt quick release latch. T-bolt and trunnion latches can be desirable to form a strong connection between V-band segments 42 or in situations where V-band clamp 18 is undone infrequently. T-bolt quick release latches are easier to engage and disengage then T-bolt or trunnion latches and can form a sufficiently strong connection. T-bolt quick release latches, therefore, can be desirable where V-band clamp 18 is undone with some regularity (e.g., for purposes of performing maintenance on a part secured by V-band clamp 18). Although one latch 44 is shown in FIG. 5, multiple latches 44 could be used in V-band clamp 18.

Link 46, as shown in FIG. 5, secures ends of adjacent V-band segments 42 to each other. Link 46 can be bolted to adjacent ends of V-band segments 42. Although one link 46 is shown in FIG. 5, multiple links 46 could be used with V-band clamp 18 depending on the number of V-band segments 42 included in V-band clamp 18.

Gap 48 is located between adjacent ends of V-band segments 42 joined by latch 44. A similar gap 50 is located between adjacent ends of V-band segments 42 where they are joined by link 46.

As shown in FIG. 5, portion 52 of first tab 22 extends radially outward of first duct flange 34. Although second duct flange 40 is not shown in FIG. 5, it should be noted that the same portion 52 of first tab 22 also extends radially outward of second duct flange 40. As further shown in FIG. 5, portion 52 of first tab 22 also extends radially outward of V-band segments 42. As a result, the only places portion 52 of first tab 22 can be located in are gaps 48 and 50. Circumferential width *w*₁ of first tab 22 is sized to allow first tab 22 to fit into either gaps 48 or 50. Because only gaps 48 or 50 can contain first tab 22, the rotational position of V-band clamp 18 can be controlled or clocked with respect to first duct flange 34, check valve 12, and second duct 16. That is, V-band clamp 18 can only be attached such that portion 52 of first tab 22 is disposed within gap 48 or gap 50.

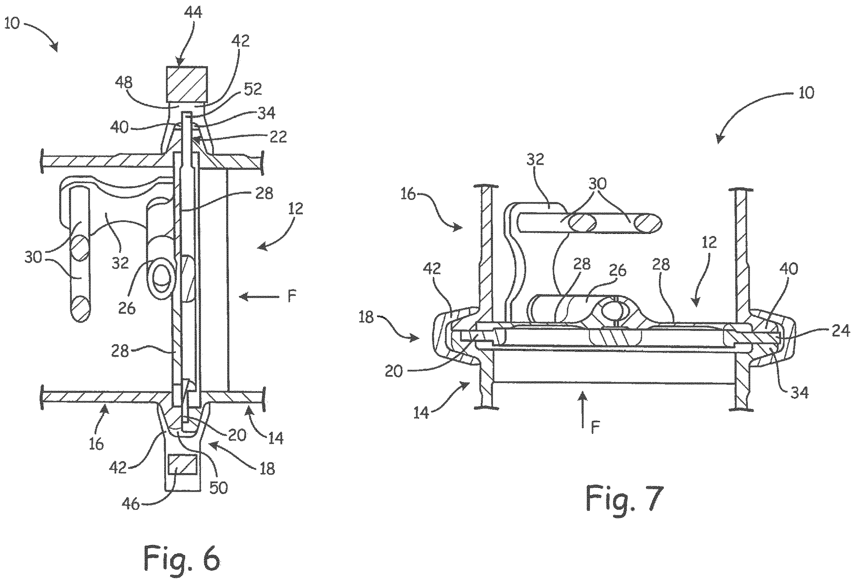

In FIG. 5, portion 52 of first tab 22 is shown disposed in gap 48. As shown, V-band clamp 18 is clocked such that latch 44 is positioned away from the section of first duct 14 that is joined to the gas turbine engine core. As a result, latch 44 is positioned away from the more cluttered environment. A mechanic or technician can, therefore, readily undue latch 44 when she needs to remove V-band clamp 18 (e.g., to maintain check valve 12, first duct 14, or second duct 16). End 54 of latch 44 is shown facing down (towards the bottom of the page) in FIG. 5. V-band clamp 18 can also be oriented so that end 54 faces up (towards the top of the page). To better show the components described above with respect to FIGs. 1-5, reference is made to FIGs. 6 and 7.

FIG. 6 is a cross-sectional view of air pressure system 10 taken along line 6-6 shown in FIG. 4. FIG. 6 shows first duct flange 34 and second duct flange 40 forming a V-profile that is engaged by V-band segment 42 of V-band clamp 18. V-band clamp 18 presses first duct flange 34 and second duct flange 40 together. In addition, FIG. 6 shows first tab 22 extending radially outward from check valve flange 20. First tab 22 can also be seen extending radially outward from first duct flange 34 and second duct flange 40 into gap 48. The upper boundary of gap 48 is defined by latch 44, thus first tab 22 can only extend to that boundary. FIG. 6 also shows that first duct flange 34 and second duct flange 40 do not contact each other where first tab 22 is disposed.

FIG. 7 similarly shows a cross-sectional view of air pressure system 10 but is taken along line 7-7 shown in FIG. 4. FIG. 7 shows second tab 24 extending radially outward from check valve flange 20. Second tab 24 extends radially outward of first duct flange 34 and second duct flange 40 but must not exceed the space provided by V-band segment 42. FIG. 7 also shows that first duct flange 34 and second duct flange 40 do not contact each other where second tab 24 is disposed. As both FIGs. 6 and 7 show, however, first duct flange 34 and second duct flange 40 do contact each other in areas where first tab 22 and second tab 24 are not present.

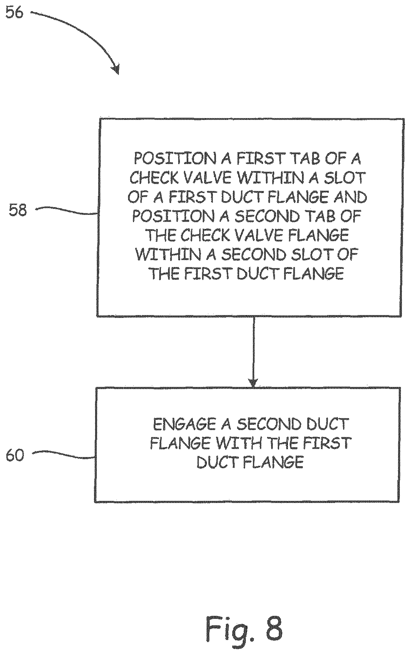

FIG. 8 is a flow chart illustrating method 56 for clocking and orienting a check valve 12 with respect to first duct 14 and second duct 16. The method includes positioning step 58 and securing step 60. In positioning step 58, first tab 22, which extends radially outward from check valve flange 20, is positioned within first slot 36 of first duct flange 34. Second tab 24, which also extends radially outward from check valve flange 20, is positioned within second slot 38 of first duct flange 34. As described above, first tab 22 and second tab 24 each have a different width and the length of first tab 22 is greater than the length of second tab 24. First tab 22 and second tab 24 are also positioned at an angle other than 180 degrees apart about check valve flange 20. Additionally, first and second slots 36 and 38 have circumferential widths and radial lengths configured to engage first tab 22 and second tab 24, respectively.

In securing step 60, second duct flange 40 of second duct 16 is engaged with first duct flange 34 of first duct 14. This secures check valve 12 between first duct 14 and second duct 16. First duct 14 and second duct 16 can be secured to each other by V-band clamp 18.

There are many reasons to use check valve 12 and first duct 14 as disclosed to ensure proper clocking and orientation of check valve 12 in air pressure system 10 including the following non-limiting examples. First, the design of check valve 12 allows mechanics or technicians to quickly and properly assemble air pressure system 10. This is because check valve 12 can only be part of air pressure second slot 38, respectively. As described above, one of either first slot 36 or second slot 38 will have a circumferential width that is smaller than a width of one of either first tab 22 or second tab 24. As a result, the mechanic or technician can quickly install check valve 12 in a proper orientation by simply fitting first tab 22 into first slot 36 and second tab 24 into second slot 38. This mistake proofing feature prevents check valve 12 from being improperly clocked.

Additionally, the design of check valve 12 ensures that it is not installed backwards (i.e. misoriented). As described above, first tab 22 and second tab 24 are disposed about check valve flange 20 at any angle other than 180 degrees. Additionally, one of tabs 22 or 24 will not be able to fit into one of slot 36 or 38, because one of the tabs will have a width wider than one of the slots. As a result, when check valve 12 is properly oriented first tab 22 fits into first slot 36 and second tab fits into second slot 38. If a mechanic or technician tried to install check valve 12 backwards, she would be prevented from doing so because one of tabs 22 or 24 will not be able to fit in one of slots 36 or 38 and the mechanic or technician will know right away that she is attempting to install check valve 12 backwards.

Because the design disclosed in this application prevents incorrect assembly in the first instance, this design is much simpler to use than prior art designs such as those found in U.S. application No. 13/381,509 filed on June 30, 2010, published as US20120125453 and entitled "Aircraft Fluid Check Valve Assembly with Indexing".

In the prior art design, three index tabs are spaced at 120 degrees angles about a check valve. The index tabs also include an index finger which is a projection extending axially in one direction from the radially outward tip of the index tab. In the prior art design, the index tabs can fit into voids formed in a first duct flange, a second duct flange, or both whether or not the check valve is installed backwards.

The mechanic or technician can tell if the check valve is installed backwards in one of two ways. She may notice a small gap between an index tab and a void or she may notice that an index finger is not pointing the right way. Either way, the prior art system actually allows the mechanic or technician to insert index tabs into the voids regardless of the check valve's orientation. This can lead to incorrect assembly of the system which might only be noticed, if at all, after the check valve is installed.

Check valve 12, additionally, is easier to manufacture compared to the prior art design. As described above tabs 22 and 24 extend radially outward from check valve 12. The prior art design includes index fingers which extend axially from an index tab. Thus, the prior art design requires more manufacturing which can increase the time it takes to manufacture and increase the cost of production. The index fingers would also require more time to design so that the index fingers work with a V-band clamp. In addition, further tolerances would need to be calculated for each index finger. Additionally, more inspections would be required because of the additional dimension added by the index finger. Check valve 12, as disclosed avoids these additional requirements and costs by employing just two radially projecting tabs.

### Discussion of Possible Embodiments

The following are non-exclusive descriptions of possible embodiments of the present invention.

An assembly according to an exemplary embodiment of this disclosure, among other possible things includes a check valve. The check valve can include a circular check valve flange that circumscribes a central axis and defines an outer perimeter of the check valve. The check valve can also include a first tab that extends radially outward from the check valve flange and has a first circumferential width and a first radial length. The check valve can also include a second tab that extends radially outward from the check valve flange and has a second circumferential width and a second radial length. The first circumferential width is different than the second circumferential width and the first radial length is greater than the second radial length. The first tab and the second tab of the check valve are disposed about the check valve flange at angles other than 180 degrees. The assembly can also include a first duct. The first duct can also include a circular first duct flange that defines an outer perimeter of the first duct. The first duct can also include a first slot that is formed in the first duct flange. The first slot has a third circumferential length and a third radial length and is configured to substantially receive the first tab. The first duct also includes a second slot that is formed in the first duct flange. The second slot has a fourth circumferential width and a fourth radial length and is configured to substantially receive the second tab. The assembly can also include a second duct. The second duct includes a circular second duct flange that is configured to engage the first duct flange.

The assembly of the preceding paragraph can optionally include, additionally and/or alternatively, any one or more of the following features, configurations and/or additional components:

A further embodiment of the foregoing assembly, wherein one of the first or second slots can have a circumferential width that can be less than one of the first circumferential width of the first tab or the second circumferential width of the second tab.

A further embodiment of the foregoing assembly, wherein the first tab and the second tab can be disposed about the check valve flange at an angle of approximately ninety degrees.

A further embodiment of any of the foregoing assembly, wherein a V-band clamp can be configured to secure the first duct to the second duct by pressing the first duct flange against the second duct flange.

A further embodiment of any of the foregoing assembly, wherein a portion of the first tab can extend radially outward beyond the first duct flange and the second duct flange.

A further embodiment of any of the foregoing assembly, wherein the portion of the first tab that extends radially outward beyond the first duct flange and the second duct flange can be disposed within a gap in the V-band clamp defined by adjacent ends of two V-band segments joined by a latch.

A further embodiment of any of the foregoing assembly, wherein the portion of the first tab can be disposed within the gap on the V-band clamp is configured to clock the V-band clamp.

A further embodiment of any of the foregoing assembly, wherein a radius of the first duct flange can be greater than a radius of the check valve flange.

A further embodiment of any of the foregoing assembly, wherein the check valve can be a duo check valve.

A further embodiment of any of the foregoing assembly, wherein the first duct and second duct can be components of an air pressure system in a gas turbine engine.

A further embodiment of any of the foregoing assembly, wherein the check valve can be clocked with respect to the first duct flange by an engagement of the first tab with the first slot and by an engagement of the second tab with the second slot.

A further embodiment of any of the foregoing assembly, wherein a disposition of the first tab and second tab about the check valve flange at an angle other than 180 degrees can orient the check valve with respect to a direction of fluid flow through the first and second ducts.

A check valve can include a circular check valve flange that circumscribes a central axis and defines an outer perimeter of the check valve. The check valve can also include a first tab that extends radially outward from the check valve flange and has a first circumferential width and a first radial length. The check valve can also include a second tab that extends radially outward from the check valve flange and has a second circumferential width and a second radial length. The first circumferential width is different than the second circumferential width and the first radial length is greater than the second radial length. The first tab and the second tab of the check valve are disposed about the check valve flange at angles other than 180 degrees.

The check valve of the preceding paragraph can optionally include, additionally and/or alternatively, any one or more of the following features, configurations and/or additional components:

A further embodiment of the foregoing check valve, wherein the check valve is a duo check valve.

A method of clocking and orienting a check valve with respect to a first duct and a second duct according to an exemplary embodiment of this disclosure, among other possible things can include the step of positioning a first tab which extends radially outward from a check valve flange of a check valve within a first slot of a first duct flange. The first tab has a first circumferential width and a first radial length. A second tab that extends radially outward from the check valve flange is positioned within a second slot on the first duct flange. The second tab has a second circumferential width and a second radial length. The first circumferential width of the first tab is different than the second circumferential width of the second tab and the first radial length of the first tab is greater than the second radial length of the second tab. The first tab and the second tab are positioned at an angle other than 180 degrees about the check valve flange. After the first and second tabs are positioned in the first and second slots a second duct flange can be engaged with the first duct flange.

The method of the preceding paragraph can optionally include, additionally and/or alternatively, any one or more of the following steps:

A further embodiment of the foregoing method, wherein the method can further include the step of securing the first duct to the second duct, in which the check valve can be positioned between the first and second ducts.

A further embodiment of the foregoing method, wherein the method can further include the step of pressing the first duct flange and the second duct flange together with a V-band clamp.

A further embodiment of the foregoing method, wherein a portion of the first tab can be positioned to extend radially outward beyond the flanges of the first and second ducts and can be disposed within a gap in the V-band clamp defined by adjacent ends of two V-band segments joined by a latch.

A further embodiment of the foregoing method, wherein proper assembly of the first duct, the second duct, and the check valve is indicated by the portion of the first tab disposed within the gap.

A further embodiment of the foregoing method, wherein a portion of the first tab can be positioned to extend radially outward beyond the flanges of the first and second ducts and can be disposed within a gap in the V-band clamp defined by adjacent ends of two V-band segments joined by a link.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A check valve (12) comprising:
a circular check valve flange (20) circumscribing a central axis and defining an outer perimeter of the check valve (12);
a first tab (22) extending radially outward from the check valve flange (20) and having a first circumferential width and a first radial length; and
a second tab (24) extending radially outward from the check valve flange (20) and having a second circumferential width and a second radial length, wherein the first circumferential width is different than the second circumferential width and wherein the first tab (22) and the second tab (24) are disposed about the check valve flange (20) at an angle other than 180 degrees apart, **characterized in that** the first radial length is greater than the second radial length.

2. The check valve of claim 1, wherein the check valve (12) is a duo check valve.

3. An assembly comprising the check valve of claim 1 or 2 and further comprising:
a first duct comprising:
a circular first duct flange defining an outer perimeter of the first duct;
a first slot formed in the first duct flange, the first slot having a third circumferential width and a third radial length and configured to substantially receive the first tab; and
a second slot formed in the first duct flange, the second slot having a fourth circumferential width and a fourth radial length and configured to substantially receive the second tab; and
a second duct comprising:
a circular second duct flange configured to engage the first duct flange.

4. The assembly of claim 3, wherein one of the third circumferential width of the first slot or the fourth circumferential width of the second slot is less than one of the first circumferential width of the first tab or the second circumferential width of the second tab, and/or wherein the first tab and the second tab are disposed about the check valve flange at an angle of approximately ninety degrees.

5. The assembly of any of claims 3 or 4, and further comprising:
a V-band clamp configured to secure the first duct (14) to the second duct (16) by pressing the first duct flange (34) against the second duct flange.

6. The assembly of claim 5, wherein a portion of the first tab (22) extends radially outward beyond the first duct flange (34) and the second duct flange (40).

7. The assembly of claim 6, wherein the portion of the first tab (22) that extends radially outward beyond the first duct flange (34) and the second duct flange (40) is disposed within a gap in the V-band clamp defined by adjacent ends of two V-band segments joined by a latch, and preferably wherein the portion of the first tab (22) disposed within the gap on the V-band clamp is configured to clock the V-band clamp.

8. The assembly of any of claims 3 to 7, wherein a radius of the first duct flange (34) is greater than a radius of the check valve flange (20), and/or wherein the first duct (14) and the second duct (16) are components of an air pressure system in a gas turbine engine.

9. The assembly of any of claims 3 to 8, wherein the check valve (12) is clocked with respect to the first duct flange (34) by an engagement of the first tab (22) with the first slot and by an engagement of the second tab (24) with the second slot, and/or wherein disposing the first tab (22) and the second tab (24) about the check valve flange (20) at an angle other than 180 degrees orients the check valve (12) with respect to a direction of fluid flow through the first and second ducts.

10. A method of clocking and orienting a check valve (12) with respect to a first duct (14) and a second duct (16), the method comprising:
positioning a first tab (22) extending radially outward from a check valve flange (20) of the check valve (12) within a first slot of a first duct flange (34) belonging to the first duct (14), the first tab having a first circumferential width and a first radial length, and positioning a second tab (24) extending radially outward from the check valve flange (20) having a second circumferential width and a second radial length within a second slot (38) of the first duct flange (34), wherein the first circumferential width of the first tab(22) is different than the second circumferential width of the second tab (24) and the first radial length of the first tab (22) is greater than the second radial length of the second tab (24), and wherein the first tab (22) and the second tab (24) are positioned at an angle other than 180 degrees about the check valve flange (20); and
engaging a second duct flange (40) of the second duct (16) with the first duct flange (34).

11. The method of claim 10, and further comprising:
securing the first duct (14) to the second duct (16), wherein the check valve (12) is positioned between the first and second ducts.

12. The method of claim 11, wherein securing the first duct (14) to the second duct (16) comprises the step of:
pressing the first duct flange (34) and the second duct flange (40) together with a V-band clamp.

13. The method of claim 12, wherein a portion of the first tab is positioned to extend radially outward beyond the flanges of the first and second ducts and is disposed within a gap in the V-band clamp defined by adjacent ends of two V-band segments joined by a latch.

14. The method of claim 13, wherein proper assembly of the first duct (14), the second duct (16), and the check valve (12) is indicated by the portion of the first tab (22) disposed within the gap.

15. The method of claim 12, wherein a portion of the first tab (22) is positioned to extend radially outward beyond the flanges of the first and second ducts and is disposed within a gap in the V-band clamp defined by adjacent ends of two V-band segments joined by a link.

## Patentansprüche

1. Rückschlagventil (12), umfassend:
einen kreisförmigen Rückschlagventilflansch (20), der eine zentrale Achse umgibt und einen äußeren Umfang des Rückschlagventils (12) definiert;
eine erste Lasche (22), die sich radial nach außen vom Rückschlagventilflansch (20) erstreckt und über eine erste Umfangsbreite und eine erste radiale Länge verfügt;
und
eine zweite Lasche (24), die sich radial nach außen vom Rückschlagventilflansch (20) erstreckt und über eine zweite Umfangsbreite und eine zweite radiale Länge verfügt, wobei die erste Umfangsbreite sich von der zweiten Umfangsbreite unterscheidet
und wobei die erste Lasche (22) und die zweite Lasche (24) um den Rückschlagventilflansch (20) bei einem Winkel außer 180 Grad beabstandet angeordnet sind, **dadurch gekennzeichnet, dass** die erste radiale Länge größer ist als die zweite radiale Länge.

2. Rückschlagventil nach Anspruch 1, wobei das Rückschlagventil (12) ein Doppel-Rückschlagventil ist.

3. Anordnung, umfassend das Rückschlagventil nach Anspruch 1 oder 2 und ferner umfassend:
einen ersten Kanal, umfassend:
einen kreisförmigen ersten Kanalflansch, der einen äußeren Umfang des ersten Kanals definiert;
einen ersten Schlitz, der im ersten Kanalflansch gebildet wird, wobei der erste Schlitz über eine dritte Umfangsbreite und eine dritte radiale Länge verfügt und dazu konfiguriert ist, die erste Lasche im Wesentlichen zu empfangen; und
einen zweiten Schlitz, der im ersten Kanalflansch gebildet wird, wobei der zweite Schlitz über eine vierte Umfangsbreite und eine vierte radiale Länge verfügt und dazu konfiguriert ist, die zweite Lasche im Wesentlichen zu empfangen; und
einen zweiten Kanal, umfassend:
einen kreisförmigen zweiten Kanalflansch, der dazu konfiguriert ist, den ersten Kanalflansch in Eingriff zu nehmen.

4. Anordnung nach Anspruch 3, wobei eine der dritten Umfangsbreite des ersten Schlitzes oder der vierten Umfangsbreite des zweiten Schlitzes geringer ist als eine der ersten Umfangsbreite der ersten Lasche oder der zweiten Umfangsbreite der zweiten Lasche und/oder wobei die erste Lasche und die zweite Lasche um den Rückschlagventilflansch bei einem Winkel von etwa neunzig Grad angeordnet sind.

5. Anordnung nach einem der Ansprüche 3 oder 4, und ferner umfassend:
eine V-Bandschelle, die dazu konfiguriert ist, den ersten Kanal (14) am zweiten Kanal (16) zu befestigen, indem der erste Kanalflansch (34) gegen den zweiten Kanalflansch gedrückt wird.

6. Anordnung nach Anspruch 5, wobei ein Abschnitt der ersten Lasche (22) sich radial nach außen über den ersten Kanalflansch (34) und den zweiten Kanalflansch (40) erstreckt.

7. Anordnung nach Anspruch 6, wobei der Abschnitt der ersten Lasche (22), der sich radial nach außen über den ersten Kanalflansch (34) und den zweiten Kanalflansch (40) erstreckt, innerhalb eines Spalts in der V-Bandschelle angeordnet ist, die von benachbarten Enden von zwei V-Bandsegmenten, die über eine Klinke verbunden sind, definiert ist, und wobei der Abschnitt der ersten Lasche (22), der innerhalb des Spalts angeordnet ist, vorzugsweise dazu konfiguriert ist, die V-Bandschelle zu takten.

8. Anordnung nach einem der Ansprüche 3 bis 7, wobei ein Radius des ersten Kanalflansches (34) größer ist als ein Radius des Rückschlagventilflansches (20) und/oder wobei der erste Kanal (14) und der zweite Kanal (16) Komponenten eines Luftdrucksystems in einem Gasturbinenmotor sind.

9. Anordnung nach einem der Ansprüche 3 bis 8, wobei das Rückschlagventil (12) in Bezug auf den ersten Kanalflansch (34) durch einen Eingriff der ersten Lasche (22) mit dem ersten Schlitz und durch einen Eingriff der zweiten Lasche (24) mit dem zweiten Schlitz getaktet wird und/oder wobei Anordnen der ersten Lasche (22) und der zweiten Lasche (24) um den Rückschlagventilflansch (20) bei einem Winkel außer 180 Grad das Rückschlagventil (12) in Bezug auf eine Richtung des Flüssigkeitsstroms durch die ersten und zweiten Kanäle ausrichtet.

10. Verfahren zum Takten und Ausrichten eines Rückschlagventils (12) in Bezug auf einen ersten Kanal (14) und einen zweiten Kanal (16), wobei das Verfahren umfasst:
Positionieren einer ersten Lasche (22), die sich radial nach außen von einem Rückschlagventilflansch (20) des Rückschlagventils (12) innerhalb eines ersten Schlitzes eines ersten Kanalflansches (34), der zum ersten Kanal (14) gehört, erstreckt, wobei die erste Lasche über eine erste Umfangsbreite und eine erste radiale Länge verfügt, und Positionieren einer zweiten Lasche (24), die sich radial nach außen vom Rückschlagventilflansch (20) mit einer zweiten Umfangsbreite und einer zweiten radialen Länge innerhalb eines zweiten Schlitzes (38) des erstes Kanalflansches (34) erstreckt, wobei sich die erste Umfangsbreite der ersten Lasche (22) von der zweiten Umfangsbreite der zweiten Lasche (24) unterscheidet und die erste radiale Länge der ersten Lasche (22) größer ist als eine zweite radiale Länge der zweiten Lasche (24), und wobei die erste Lasche (22) und die zweite Lasche (24) bei einem Winkel außer 180 Grad um den Rückschlagventilflansch (20) positioniert sind; und
Ineingriffnehmen eines zweiten Kanalflansches (40) des zweiten Kanals (16) mit dem ersten Kanalflansch (34).

11. Verfahren nach Anspruch 10, und ferner umfassend:
Befestigen des ersten Kanals (14) am zweiten Kanal (16), wobei das Rückschlagventil (12) zwischen den ersten und zweiten Kanälen positioniert ist.

12. Verfahren nach Anspruch 11, wobei Befestigen des ersten Kanals (14) am zweiten Kanal (16) folgenden Schritt umfasst:
Drücken des ersten Kanalflansches (34) und des zweiten Kanalflansches (40) zusammen mit einer V-Bandschelle.

13. Verfahren nach Anspruch 12, wobei ein Abschnitt der ersten Lasche positioniert ist, um sich radial nach außen über die Flansche der ersten und zweiten Kanäle zu erstrecken, und innerhalb eines Spalts in der V-Bandschelle angeordnet ist, die von benachbarten Enden von zwei V-Bandsegmenten, die über eine Klinke verbunden sind, definiert wird.

14. Verfahren nach Anspruch 13, wobei die ordnungsgemäße Anordnung des ersten Kanals (14), des zweiten Kanals (16) und des Rückschlagventils (12) durch den Abschnitt der ersten Lasche (22), die innerhalb des Spalt angeordnet ist, angegeben wird.

15. Verfahren nach Anspruch 12, wobei ein Abschnitt der ersten Lasche (22) positioniert ist, um sich radial nach außen über die Flansche der ersten und zweiten Kanäle zu erstrecken, und innerhalb eines Spalts in der V-Bandschelle angeordnet ist, die von benachbarten Enden von zwei V-Bandsegmenten, die über eine Klinke verbunden sind, definiert wird.

## Revendications

1. Clapet de non-retour (12) comprenant :
une bride circulaire de clapet de non-retour (20) circonscrivant un axe central et définissant un périmètre extérieur du clapet de non-retour (12) ;
une première patte (22) s'étendant radialement vers l'extérieur depuis la bride de clapet de non-retour (20) et ayant une première largeur circonférentielle et une première longueur radiale ; et
une seconde patte (24) s'étendant radialement vers l'extérieur depuis la bride de clapet de non-retour (20) et ayant une seconde largeur circonférentielle et une seconde longueur radiale, dans lequel la première largeur circonférentielle est différente de la seconde largeur circonférentielle et dans lequel la première patte (22) et la seconde patte (24) sont disposées autour de la bride de clapet de non-retour (20) espacées d'un angle autre que de 180 degrés, **caractérisé en ce que** la première longueur radiale est supérieure à la seconde longueur radiale.

2. Clapet de non-retour selon la revendication 1, dans lequel le clapet de non-retour (12) est un clapet de non-retour duo.

3. Ensemble comprenant le clapet de non-retour selon la revendication 1 ou 2 et comprenant en outre :
un premier conduit comprenant :
une bride circulaire de premier conduit définissant un périmètre extérieur du premier conduit ;
une première fente formée dans la bride de premier conduit, la première fente ayant une troisième largeur circonférentielle et une troisième longueur radiale et étant configurée pour recevoir sensiblement la première patte ; et
une deuxième fente formée dans la bride de premier conduit, la deuxième fente ayant une quatrième largeur circonférentielle et une quatrième longueur radiale et étant configurée pour recevoir sensiblement la deuxième patte ; et
un deuxième conduit comprenant :
une bride circulaire de deuxième conduit configurée pour s'engager avec la bride de premier conduit.

4. Ensemble selon la revendication 3, dans lequel une largeur parmi la troisième largeur circonférentielle de la première fente et la quatrième largeur circonférentielle de la deuxième fente est inférieure à une largeur parmi la première largeur circonférentielle de la première patte et la deuxième largeur circonférentielle de la deuxième patte, et/ou dans lequel la première patte et la deuxième patte sont disposées autour de la bride de clapet de non-retour selon un angle d'approximativement quatre-vingt-dix degrés.

5. Ensemble selon l'une quelconque des revendications 3 ou 4, et comprenant en outre :
un élément de serrage à bande en V configuré pour fixer le premier conduit (14) au deuxième conduit (16) en pressant la bride de premier conduit (34) contre la bride de deuxième conduit.

6. Ensemble selon la revendication 5, dans lequel une partie de la première patte (22) s'étend radialement vers l'extérieur au-delà de la bride de premier conduit (34) et de la bride de deuxième conduit (40).

7. Ensemble selon la revendication 6, dans lequel la partie de la première patte (22) qui s'étend radialement vers l'extérieur au-delà de la bride de premier conduit (34) et de la bride de deuxième conduit (40) est disposée dans un espace dans l'élément de serrage à bande en V défini par les extrémités adjacentes de deux segments de bande en V reliés par un mécanisme de verrouillage, et de préférence dans lequel la partie de la première patte (22) disposée dans l'espace sur l'élément de serrage à bande en V est configurée pour verrouiller l'élément de serrage à bande en V.

8. Ensemble selon l'une quelconque des revendications 3 à 7, dans lequel un rayon de la bride de premier conduit (34) est supérieur à un rayon de la bride de clapet de non-retour (20), et/ou dans lequel le premier conduit (14) et le deuxième conduit (16) sont des composants d'un système à pression d'air dans une turbine à gaz.

9. Ensemble selon l'une quelconque des revendications 3 à 8, dans lequel le clapet de non-retour (12) est verrouillé par rapport à la bride de premier conduit (34) par une entrée en prise de la première patte (22) avec la première fente et par une entrée en prise de la deuxième patte (24) avec la deuxième fente, et/ou dans lequel la pose de la première patte (22) et de la deuxième patte (24) autour de la bride de clapet de non-retour (20) selon un angle autre que de 180 degrés oriente le clapet de non-retour (12) par rapport à une direction d'écoulement de fluide dans les premier et deuxième conduits.

10. Procédé de verrouillage et d'orientation d'un clapet de non-retour (12) par rapport à un premier conduit (14) et à un deuxième conduit (16), le procédé comprenant :
le positionnement d'une première patte (22) s'étendant radialement vers l'extérieur depuis une bride de clapet de non-retour (20) du clapet de non-retour (12) dans une première fente d'une bride de premier conduit (34) appartenant au premier conduit (14), la première patte ayant une première largeur circonférentielle et une première longueur radiale, et le positionnement d'une deuxième patte (24) s'étendant radialement vers l'extérieur depuis la bride de clapet de non-retour (20) ayant une deuxième largeur circonférentielle et une deuxième longueur radiale dans une deuxième fente (38) de la bride de premier conduit (34), dans lequel la première largeur circonférentielle de la première patte (22) est différente de la deuxième largeur circonférentielle de la deuxième patte (24) et la première longueur radiale de la première patte (22) est supérieure à la deuxième longueur radiale de la deuxième patte (24), et dans lequel la première patte (22) et la deuxième patte (24) sont positionnées selon un angle autre que de 180 degrés autour de la bride de clapet de non-retour (20) ; et la mise en prise d'une bride de deuxième conduit (40) du deuxième conduit (16) avec la bride de premier conduit (34).

11. Procédé selon la revendication 10, et comprenant en outre :
la fixation du premier conduit (14) au deuxième conduit (16), dans lequel le clapet de non-retour (12) est positionné entre les premier et deuxième conduits.

12. Procédé selon la revendication 11, dans lequel la fixation du premier conduit (14) au deuxième conduit (16) comprend l'étape de :
pressage de la bride de premier conduit (34) et de la bride de deuxième conduit (40) avec un élément de serrage à bande en V.

13. Procédé selon la revendication 12, dans lequel une partie de la première patte est positionnée pour s'étendre radialement vers l'extérieur au-delà des brides des premier et deuxième conduits et est disposée dans un espace dans l'élément de serrage à bande en V défini par les extrémités adjacentes de deux segments de bande en V reliés par un mécanisme de verrouillage.

14. Procédé selon la revendication 13, dans lequel le bon assemblage du premier conduit (14), du deuxième conduit (16) et du clapet de non-retour (12) est indiqué par la partie de la première patte (22) disposée dans l'espace.

15. Procédé selon la revendication 12, dans lequel une partie de la première patte (22) est positionnée pour s'étendre radialement vers l'extérieur au-delà des brides des premier et deuxième conduits et est disposée dans un espace de l'élément de serrage à bande en V défini par des extrémités adjacentes de deux segments de bande en V reliés par un élément de liaison.
